# EUROPÄISCHE PATENTSCHRIFT

(11) **EP 0 970 861 B1**
(45) Veröffentlichungstag und Bekanntmachung des Hinweises auf die Patenterteilung: **25.06.2003**
(21) Anmeldenummer: 99110437.3
(22) Anmeldetag: 29.05.1999
(51) Int. Cl.: B60T 7/10, B60T 13/74

(54) **Vorrichtung zur Betätigung einer elektrischen Feststellbremse eines Fahrzeugs**
Device for actuation of an electrically operated parking brake of a vehicle
Dispositif pour l'actuation d'un frein électrique de stationnement pour véhicule

(30) Priorität: 10.07.1998 DE 19831072
(43) Veröffentlichungstag der Anmeldung: 12.01.2000
(73) Patentinhaber: DaimlerChrysler AG, 70567 Stuttgart (DE)
(72) Erfinder: Kuhn, Friedemann, 70736 Fellbach (DE)

(56) Entgegenhaltungen:
- WO-A-96/26091
- DE-A- 19 718 679
- US-A- 4 295 687

## Beschreibung

Eine elektrische Feststellbremse geht beispielsweise aus der DE 41 29 919 A1 hervor.

Bei dieser elektrischen Feststellbremse ist eine Betätigungseinrichtung vorgesehen, welche als Sollwertgeber ein als schwenkbarer Handhebel ausgebildetes Betätigungselement aufweist, das in Griffnähe des Fahrzeugführers angeordnet ist. Ein Handhebelweggeber liefert ein der jeweiligen Schwenkstellung entsprechendes Signal (Sollwert) an ein elektronisches Steuergerät. Eine beispielsweise an einem Spindelantrieb der Radbremsen angeordnete Kraftmeßvorrichtung liefert ein der aktuell vorhandenen Bremsenspannkraft proportionales elektrisches Signal (Istwert). Durch Vergleich von Sollwert und Istwert und bei einem unzulässigen Abweichen des Istwertes von dem Sollwert wird ein Steuersignal zum Angleichen des Istwertes an den Sollwert ausgelöst.

Eine solche Betätigungsvorrichtung gleicht weitgehend dem an sich bekannten Bremshebel zur Betätigung der Feststellbremse über Seilzüge.

Eine Betätigung der Feststellbremse kann bei derartigen Betätigungsvorrichtungen nur durch eine Verschwenkung des Bremshebels vom Fahrer erkannt werden. In vielen Fällen ist eine Verschwenkung des Bremshebels jedoch nicht erwünscht.

Aufgabe der Erfindung ist es daher, eine gattungsgemäße Vorrichtung zur Betätigung einer elektrischen Feststellbremse eines Fahrzeugs derart weiterzubilden, dass eine Betätigung und Entriegelung einer elektrischen Feststellbremse auf einfache Weise und mit geringem Kraftaufwand möglich ist und eine betätigte Feststellbremse dabei gleichzeitig ohne weiteres vom Fahrer erkennbar ist. Darüber hinaus soll die Vorrichtung auch neben einer manuellen Betätigung eine teilautomatische oder vollautomatische Betätigung ermöglichen.

Diese Aufgabe wird bei einer Vorrichtung zur Betätigung einer elektrischen Feststellbremse eines Fahrzeugs der eingangs beschriebenen Art erfindungsgemäß gelöst durch einen entgegen der Rückstellkraft einer Rückstellfeder manuell betätigbaren, einseitig schwenkbar gelagerten Griff mit einem Entriegelungs- und Anzeigemittel dessen Auslenkung aus der Ruhelage in ein Steuersignal für die Erzeugung einer Bremskraft umwandelbar ist.

Ein derartiger Griff ermöglicht nicht nur eine einfache Bedienung bei geringem Kraftaufwand - er muss lediglich gegen die Rückstellkraft der Rückstellfeder betätigt werden -, durch das Anzeigemittel wird eine betätigte Feststellbremse dem Fahrer kontinuierlich angezeigt, durch das Entriegelungselement ist eine Entrieqelung ohne großen Kraftaufwand möglich.

Eine besonders vorteilhafte Ausführungsform sieht dabei vor, daß das Entriegelungs- und Anzeigemittel eine in dem Griff angeordnete Entriegelungstaste mit einer Funktionsbeleuchtung ist. Auf diese Weise wird das Entriegelungsmittel mit dem Anzeigemittel kombiniert. Bei Betätigen der Entriegelungstaste erlischt die Funktionsbeleuchtung.

Bei einer vorteilhaften Weiterbildung der Feststellbremse ist darüber hinaus vorgesehen, daß das Entriegelungs- und Anzeigemittel im nichtbetätigten Zustand des Griffs durch eine Klappe bedeckt ist, die im betätigten Zustand des Griffs öffnet.

Durch den Griff ist eine Ein- und Ausschaltung der elektrischen Feststellbremse auf einfache Weise möglich, wobei der Griff aufgrund der Rückstellkraft der Rückstellfeder nach Betätigung wieder in seine Ausgangsposition zurückkehrt. Im betätigten Zustand signalisiert dabei lediglich das Anzeigemittel eine Betätigung der Feststellbremse.

Um eine der Auslenkung des Griffs proportionale Bremskraft zu ermöglichen, sieht eine vorteilhafte Ausführungsform vor, daß die Auslenkung des Griffes aus der Ruhelage bei gleichzeitiger Betätigung des Entriegelungsmittels in ein der Auslenkung des Griffes proportionales Bremskraft-Steuersignal umwandelbar ist.

Zur Realisierung einer teil- oder vollautomatischen Funktion der Vorrichtung ist vorgesehen, daß sie mit einem automatischen Getriebe derart gekoppelt ist, daß beim Einlegen einer Parkstufe eine automatische Betätigung der Vorrichtung und eine Anzeige der Betätigung durch das Anzeigemittel erfolgt und dass beim Verlassen der Parkstufe eine automatische Entriegelung erfolgt.

Ferner kann vorgesehen sein, dass die Vorrichtung eine Hill-holder-Funktion derart aufweist, dass bei einem Stillstand des Fahrzeugs eine automatische Betätigung der Vorrichtung und eine Anzeige der Betätigung erfolgen.

Weitere Vorteile und Merkmale der Erfindung sind Gegenstand der nachfolgenden Beschreibung sowie der zeichnerischen Darstellung einiger Ausführungsbeispiele.
- Fig. 1: zeigt schematisch die Anordnung eitler erfindungsgemäßen Vorrichtung in der Mittelkonsole eines Fahrzeugs in ihrer Ruhelage;
- Fig. 2: zeigt die in Fig. 1 dargestellte Vorrichtung in der betätigten Position;
- Fig. 3: zeigt eine Draufsicht auf einen Griff einer erfindungsgemäßen Vorrichtung mit einem kombinierten Entriegelungs- und Anzeigemittel;
- Fig.4a,b: zeigt eine andere Ausführungsform eines Griffes einer erfindungsgemäßen Vorrichtung.

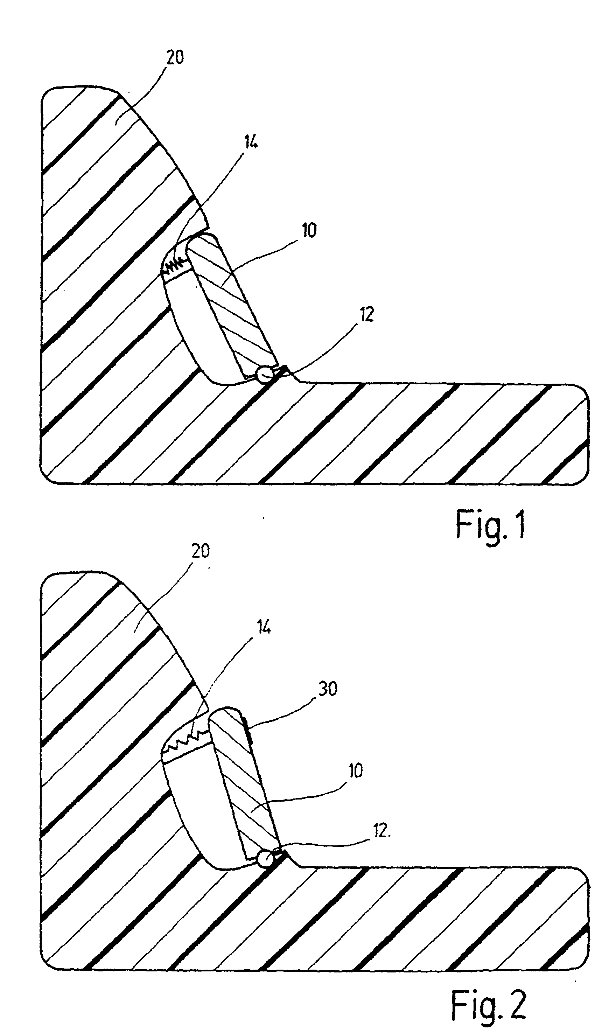

Eine in Fig. 1 und 2 dargestellte Vorrichtung zur Betätigung einer elektrischen Feststellbremse umfasst einen Griff 10, der an einem Schwenkpunkt 12 schwenkbar gelagert ist und entgegen der Ruckstellkraft einer Rückstellfeder 14 aus seiner Ruhelage ausgelenkt werden kann. Der Griff 10 ist in einer Mittelkonsole 20 eines Fahrzeugs angeordnet.

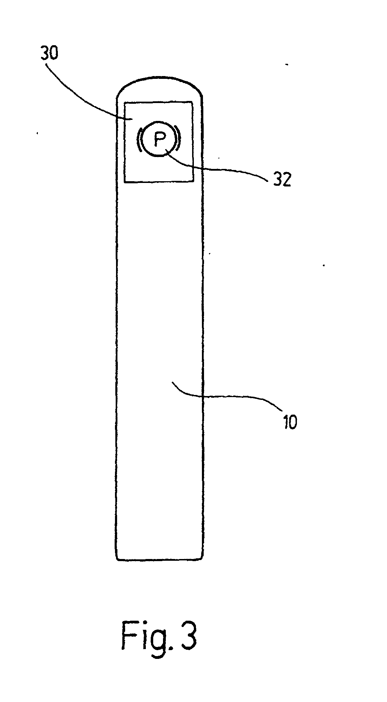

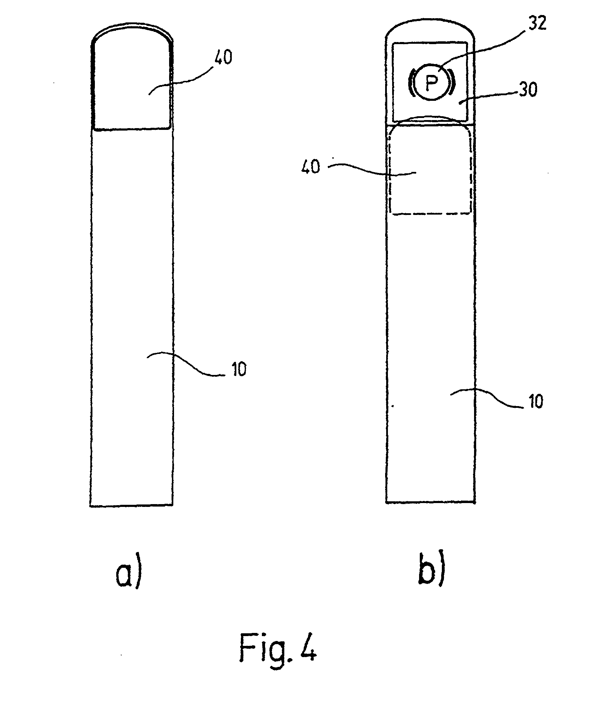

Wie insbesondere aus Fig. 3 und 4 hervorgeht, weist der Griff 10 an seiner einem Fahrer zugewandten Oberseite einen Entriegelungsknopf 30 auf, der wie in Fig. 3 und 4 dargestellt ist, mit einem Anzeigemittel in Form einer Funktionsbeleuchtung 32 versehen ist.

Wie aus Fig. 4 hervorgeht, kann an dem Griff 10 ein Klappenelement vorgesehen sein, welches in der Ruhelage des Griffs 10 den Entriegelungstaster 30 und die Funktionsbeleuchtung 32 überdeckt, so daß diese in der Ruhelage nicht sichtbar sind. Bei einer Betätigung der Vorrichtung wird das Klappenelement 40 so in Axialrichtung des Griffes 10 verschoben, daß der Entriegelungstaster 30 und die Funktionsbeleuchtung 32 freiliegen, so daß eine Betätigung des Entriegelungstasters 32 und eine Anzeige der betätigten elektrischen Feststellbremse durch die Funktionsbeleuchtung 32 realisiert ist.

Die Funktion der obenbeschriebenen Vorrichtung zur Betätigung einer elektrischen Feststellbremse eines Fahrzeugs wird nachfolgend beschrieben. Zur Betätigung der Feststellbremse wird der Griff 10 entgegen der Rückstellkraft der Rückstellfeder 14 betätigt. In diesem Falle leuchtet die Funktionsbeleuchtung 32 (Symbol) auf, um so auf eine Betätigung der Feststellbremse hinzuweisen. Zum Lösen der elektrisch betätigten Feststellbremse wird der Entriegelungstaster 30 betätigt.

Bei einem gleichzeitigen Betätigen des Entriegelungstasters 30 und des Griffs 10 wird durch ein in dem Griff 10 beispielsweise in Form eines Potentiometer angeordnetes Umwandlungsmittel ein der Auslenkung aus der Ruhelage des Griffs 10 proportionales Steuersignal an eine (nicht dargestellte) Steuereinrichtung ausgegeben, welche zu einer Bremskraft an den Radbremsen führt, die der Auslenkung des Griffs 10 aus der Ruhelage proportional ist.

Die Vorrichtung kann gekoppelt sein mit einem automatischen Getriebe. Dabei erfolgt eine automatische Betätigung der Vorrichtung immer dann, wenn der Wählhebel des Getriebes in die Parkstellung gestellt wird. Eine automatische Entriegelung erfolgt beim Verlassen des Wählhebels des Getriebes der Parkstellung. Es versteht sich, daß dabei jeweils das Anzeigemittel in Form der Funktionsbeleuchtung 32 aufleuchtet.

Die Vorrichtung kann ferner eine Hill-holder-Funktion aufweisen, die darin besteht, daß bei einem Stillstand des Fahrzeugs eine automatische Betätigung der Vorrichtung und eine Anzeige dieser Betätigung erfolgt.

## Patentansprüche (Patentansprüche für folgende(n) Vertragsstaat(en): DE)

1. Vorrichtung zur Betätigung einer elektrischen Feststellbremse eines Fahrzeugs, **gekennzeichnet durch** eine entgegen der Rückstellkraft einer Rückstellfeder (14) manuell betätigbaren, einseitig schwenkbar gelagerten Griff (10) mit einem Entriegelungs- und Anzeigemittel (30, 32), wobei die Auslenkung des Griffs (10) aus der Ruhelage in ein Steuersignal für die Erzeugung einer Bremskraft umwandelbar ist, und wobei der Griff (10) nach Betätigung wieder in seine Ruhelage zurückkehrt.

2. Vorrichtung nach Anspruch 1,
**dadurch gekennzeichnet,**
**dass** das Entriegelungs- und Anzeigemittel (30, 32) ein in dem Griff angeordneter Entriegelungstaster (30) mit einer Funktionsbeleuchtung (32) ist.

3. Vorrichtung nach Anspruch 1 oder 2,
**dadurch gekennzeichnet,**
**dass** das Entriegelungs- und Anzeigemittel (30, 32) im nichtbetätigten Zustand des Griffes (10) durch eine Klappe (40) bedeckt ist, die beim Betätigen des Griffes (10) öffnet.

4. Vorrichtung nach einem der Ansprüche 1 bis 3,
**dadurch gekennzeichnet,**
**dass** die Auslenkung des Griffes (10) aus der Ruhelage bei gleichzeitigem Betätigen des Entriegelungsmittels (30) in ein der Auslenkung des Griffes (10) proportionales Bremskraft-Steuersignal umwandelbar ist.

5. Vorrichtung nach einem der Ansprüche 1 bis 4,
**dadurch gekennzeichnet,**
**dass** sie mit einem automatischen Getriebe derart gekoppelt ist, dass beim Einlegen einer Parkstufe eine automatische Betätigung der Vorrichtung und eine Anzeige der Betätigung durch das Anzeigemittel (32) erfolgt und dass bei einem Verlassen der Parkstufe eine automatische Entriegelung der Vorrichtung erfolgt.

6. Vorrichtung nach einem der Ansprüche 1 bis 5,
**dadurch gekennzeichnet,**
**dass** sie eine Hillholder-Funktion derart aufweist, dass bei einem Stillstand des Fahrzeugs eine automatische Betätigung der Vorrichtung und eine Anzeige der Betätigung erfolgt, die durch das Entriegelungsmittel (30) entriegelbar ist.

## Patentansprüche (Patentansprüche für folgende(n) Vertragsstaat(en): FR, GB, IT, ES)

1. Vorrichtung zur Betätigung einer elektrischen Feststellbremse eines Fahrzeugs, **gekennzeichnet durch** eine entgegen der Rückstellkraft einer Rückstellfeder (14) manuell betätigbaren, einseitig schwenkbar gelagerten Griff (10) mit einem Entriegelungs- und Anzeigemittel (30, 32), wobei die Auslenkung des Griffs (10) aus der Ruhelage in ein Steuersignal für die Erzeugung einer Bremskraft umwandelbar ist.

2. Vorrichtung nach Anspruch 1,
**dadurch gekennzeichnet,**
**dass** das Entriegelungs- und Anzeigemittel (30, 32) ein in dem Griff angeordneter Entriegelungstaster (30) mit einer Funktionsbeleuchtung (32) ist.

3. Vorrichtung nach Anspruch 1 oder 2,
**dadurch gekennzeichnet,**
**dass** das Entriegelungs- und Anzeigemittel (30, 32) im nichtbetätigten Zustand des Griffes (10) durch eine Klappe (40) bedeckt ist, die beim Betätigen des Griffes (10) öffnet.

4. Vorrichtung nach einem der Ansprüche 1 bis 3,
**dadurch gekennzeichnet,**
**dass** die Auslenkung des Griffes (10) aus der Ruhelage bei gleichzeitigem Betätigen des Entriegelungsmittels (30) in ein der Auslenkung des Griffes (10) proportionales Bremskraft-Steuersignal umwandelbar ist.

5. Vorrichtung nach einem der Ansprüche 1 bis 4,
**dadurch gekennzeichnet,**
**dass** sie mit einem automatischen Getriebe derart gekoppelt ist, dass beim Einlegen einer Parkstufe eine automatische Betätigung der Vorrichtung und eine Anzeige der Betätigung durch das Anzeigemittel (32) erfolgt und dass bei einem Verlassen der Parkstufe eine automatische Entriegelung der Vorrichtung erfolgt.

6. Vorrichtung nach einem der Ansprüche 1 bis 5,
**dadurch gekennzeichnet,**
**dass** sie eine Hillholder-Funktion derart aufweist, dass bei einem Stillstand des Fahrzeugs eine automatische Betätigung der Vorrichtung und eine Anzeige der Betätigung erfolgt, die durch das Entriegelungsmittel (30) entriegelbar ist.

## Claims (Claims for the following Contracting State(s): DE)

1. Device for actuating an electric parking brake of a motor vehicle, **characterised by** a handle (10), pivotably mounted at one end and manually operable against the return force of a return spring (14), with a release and display means (30, 32), whereby a displacement of the handle (10) out of the non-operating position can be converted into a control signal for generating a braking force and whereby the handle (10) is returned to its non-operating position again after operation.

2. Device as claimed in claim 1,
**characterised in that**
the release and display means (30, 32) is a release button (30) with a function light (32) disposed in the handle.

3. Device as claimed in claim 1 or 2, **characterised in that**
the release and display means (30, 32) is covered by a flap (40) when the handle (10) is in the non-operated state, which is opened when the handle (10) is operated.

4. Device as claimed in one of claims 1 to 3,
**characterised in that**
a displacement of the handle (10) out of the non-operating position accompanied by simultaneous operation of the release means (30) can be converted into a braking force control signal proportional to the displacement of the handle (10).

5. Device as claimed in one of claims 1 to 4,
**characterised in that**
it is coupled with an automatic gear system in such a way that when a parking gear is engaged, the device is automatically actuated and the display means (32) automatically indicates such actuation and, on changing out of the parking gear, the device is automatically released.

6. Device as claimed in one of claims 1 to 5,
**characterised in that**
it incorporates a hill-holder function whereby the device is automatically actuated and a display indicating such actuation is generated when the vehicle is stationary, and can be released by the release means (30).

## Claims (Claims for the following Contracting State(s): FR, GB, IT, ES)

1. Device for actuating an electric parking brake of a motor vehicle, **characterised by** a handle (10), pivotably mounted at one end and manually operable against the return force of a return spring (14), with a release and display means (30, 32), whereby a displacement of the handle (10) out of its non-operating position can be converted into a control signal for generating a braking force.

2. Device as claimed in claim 1, **characterised in that**
the release and display means (30, 32) is a release button (30) with a function light (32) disposed in the handle.

3. Device as claimed in claim 1 or 2, **characterised in that**
the release and display means (30, 32) is covered by a flap (40) when the handle (10) is in the non-operated state, which is opened when the handle (10) is operated.

4. Device as claimed in one of claims 1 to 3,
**characterised in that**
a displacement of the handle (10) out of the non-operating position accompanied by simultaneous operation of the release means (30) can be converted into a braking force control signal proportional to the displacement of the handle (10) .

5. Device as claimed in one of claims 1 to 4, **characterised in that**
it is coupled with an automatic gear system in such a way that when a parking gear is engaged, the device is automatically actuated and the display means (32) automatically indicates such actuation and, on changing out of the parking gear, the device is automatically released.

6. Device as claimed in one of claims 1 to 5, **characterised in that**
it incorporates a hill-holder function whereby the device is automatically actuated and a display indicating such actuation is generated when the vehicle is stationary, and can be released by the release means (30).

## Revendications (Revendications pour l'(les) Etat(s) contractant(s) suivant(s): DE)

1. Dispositif pour l'actionnement d'un frein électrique de stationnement pour véhicule automobile, **caractérisé par** une poignée (10) montée de sorte à pouvoir pivoter d'un côté et actionnable manuellement à l'encontre de la force de rappel d'un ressort de rappel (14), avec un moyen de déverrouillage et d'affichage (30, 32), le déplacement de la poignée (10) depuis la position de repos peuvent se transformer en un signal de commande pour la génération d'une force de freinage, et la poignée (10) revenant à sa position de repos après avoir été actionnée.

2. Dispositif selon la revendication 1, **caractérisé en ce que** le moyen de déverrouillage et d'affichage (30, 32) est un bouton de déverrouillage (30) avec un témoin lumineux (32) aménagé dans la poignée.

3. Dispositif selon la revendication 1 ou 2, **caractérisé en ce que** le moyen de déverrouillage et d'affichage (30, 32) est recouvert d'un clapet (40) lorsque la poignée (10) n'est pas actionnée, lequel s'ouvre lorsque la poignée (10) est actionnée.

4. Dispositif selon l'une des revendications 1 à 3, **caractérisé en ce que** le déplacement de la poignée (10) depuis la position de repos tout en actionnant simultanément le moyen de déverrouillage (30), est transformable en un signal de commande pour la force de freinage proportionnel au déplacement de la poignée (10).

5. Dispositif selon l'une des revendications 1 à 4, **caractérisé en ce qu'**il est couplé avec une boîte de vitesses automatique de sorte qu'en sélectionnant une position de stationnement, un actionnement automatique du dispositif et un affichage de l'actionnement à l'aide du moyen d'affichage (32) s'ensuivent, et qu'en quittant la position de stationnement, un déverrouillage automatique du dispositif s'effectue.

6. Dispositif selon l'une des revendications 1 à 5, **caractérisé en ce qu'**il présente une fonction encliquetage anti-recul, de sorte qu'en cas d'immobilisation du véhicule, un actionnement automatique du dispositif et l'affichage de l'actionnement s'ensuivent, lesquels peuvent être déverrouillés à l'aide du moyen de déverrouillage (30).

## Revendications (Revendications pour l'(les) Etat(s) contractant(s) suivant(s): FR, GB, IT, ES)

1. Dispositif pour l'actionnement d'un frein électrique de stationnement pour véhicule automobile, **caractérisé par** une poignée (10) montée de sorte à pouvoir pivoter d'un côté et actionnable manuellement à l'encontre de la force de rappel d'un ressort de rappel (14), avec un moyen de déverrouillage et d'affichage (30, 32), le déplacement de la poignée (10) depuis la position de repos pouvant se transformer en un signal de commande pour la génération d'une force de freinage.

2. Dispositif selon la revendication 1, **caractérisé en ce que** le moyen de déverrouillage et d'affichage (30, 32) est un bouton de déverrouillage (30) avec un témoin lumineux (32) aménagé dans la poignée.

3. Dispositif selon la revendication 1 ou 2, **caractérisé en ce que** le moyen de déverrouillage et d'affichage (30, 32) est recouvert d'un clapet (40) lorsque la poignée (10) n'est pas actionnée, lequel s'ouvre lorsque la poignée (10) est actionnée.

4. Dispositif selon l'une des revendications 1 à 3, **caractérisé en ce que** le déplacement de la poignée (10) depuis la position de repos tout en actionnant simultanément le moyen de déverrouillage (30), est transformable en un signal de commande pour la force de freinage proportionnel au déplacement de la poignée (10).

5. Dispositif selon l'une des revendications 1 à 4, **caractérisé en ce qu'**il est couplé avec une boîte de vitesses automatique de sorte qu'en sélectionnant une position de stationnement, un actionnement automatique du dispositif et un affichage de l'actionnement à l'aide du moyen d'affichage (32) s'ensuivent, et qu'en quittant la position de stationnement, un déverrouillage automatique du dispositif s'effectue.

6. Dispositif selon l'une des revendications 1 à 5, **caractérisé en ce qu'**il présente une fonction encliquetage anti-recul, de sorte qu'en cas d'immobilisation du véhicule, un actionnement automatique du dispositif et l'affichage de l'actionnement s'ensuivent, lesquels peuvent être déverrouillés à l'aide du moyen de déverrouillage (30).
